Europäisches Patentamt

(19) European Patent Office

Office européen des brevets

(11) Publication number: **0 111 457**
**B1**

## EUROPEAN PATENT SPECIFICATION

(12)

(45) Date of publication of patent specification: **27.07.88**

(51) Int. Cl.⁴: **B 60 J 5/10**

(21) Application number: **83830223.0**

(22) Date of filing: **15.11.83**

---

(54) **Door for the rear wall of a motor vehicle.**

---

(30) Priority: **02.12.82 IT 5402882 u**

(43) Date of publication of application:
**20.06.84 Bulletin 84/25**

(45) Publication of the grant of the patent:
**27.07.88 Bulletin 88/30**

(84) Designated Contracting States:
**BE DE FR GB NL SE**

(56) References cited:
**EP-A-0 044 649**
**DE-A-3 046 372**
**GB-A-2 078 628**

(73) Proprietor: **FIAT AUTO S.p.A.**
**Corso Giovanni Agnelli 200**
**I-10135 Torino (IT)**

(72) Inventor: **Galantucci, Vincenzo**
**Via Verdi 15**
**I-10093 Collegno (Torino) (IT)**
Inventor: **Cissello, Bruno**
**Corso Casale 78**
**I-14100 Asti (IT)**

(74) Representative: **Bosotti, Luciano et al**
**c/o Jacobacci-Casetta & Perani S.p.A. Via Alfieri, 17**
**I-10121 Torino (IT)**

---

Courier Press, Leamington Spa, England.

## Description

The present invention relates to doors for the rear walls of motor vehicle bodies.

More specifically, the present invention relates to a door for the rear wall of a motor vehicle body as set forth in the pre-characterising portion of Claim 1. Such a door is known, for instance from GB-A-2 078 628.

According to the invention a door of the kind specified above is provided having the further features set forth in the characterising portion of Claim I.

By virtue of this characteristic, a door for the rear wall of a motor vehicle is formed which has considerable strength, lightness and compactness, and is particularly easy and efficient to assemble and use.

Further characteristics and advantages of the invention will become apparent from the following description, given purely by way of a nonlimiting example with reference to the appended drawings, in which:

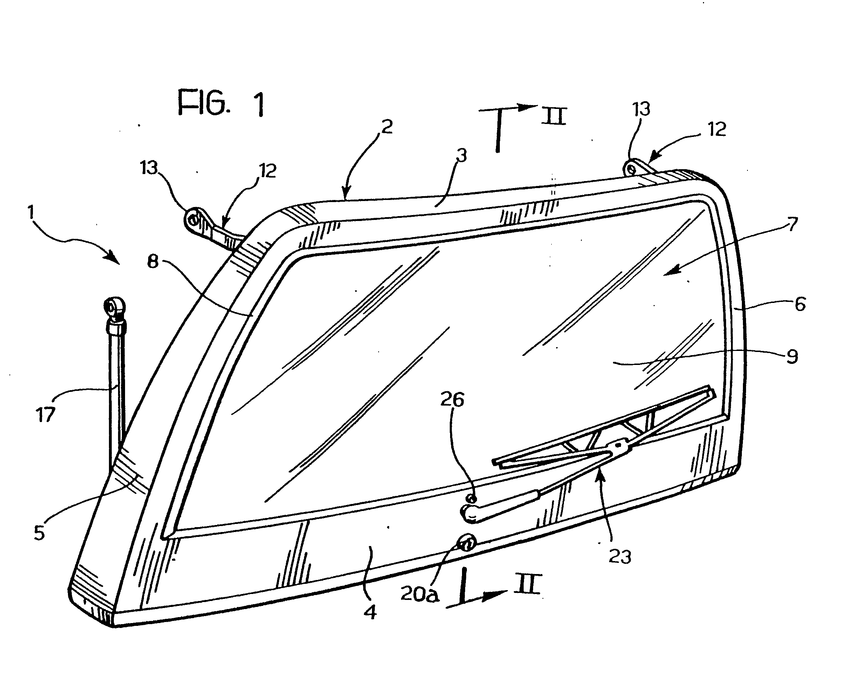

Figure 1 is a side perspective view from above of a door according to the invention,

Figure 2 is a section take on the line II-II of Figure 1, in which, to facilitate the comprehension of the function of several parts of the invention, the invention is shown in its assembled position on the rear wall of a motor vehicle, illustrated schematically in broken outline, and

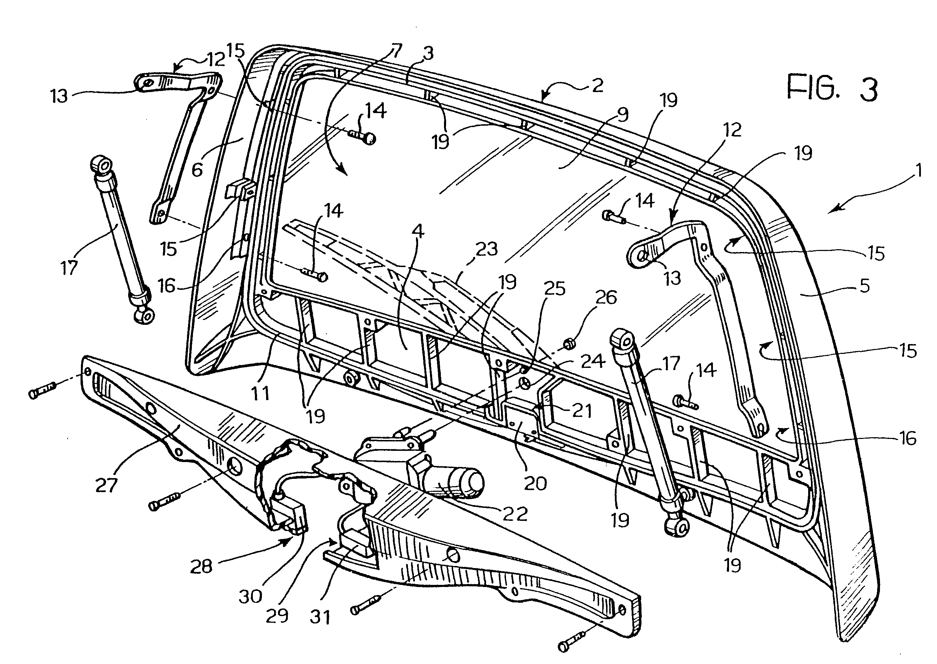

Figure 3 is an exploded perspective view of the door according to the invention from a point of view approximately opposite the point of view of Figure 1.

In the drawings, a door (hatch), generally indicated 1, is intended for connection to the rear part of the body of a motor vehicle (not illustrated).

The door 1 has a frame 2 constituted by a single element (shell) moulded from plastics material and having an approximately trapezoidal shape. The frame 2 comprises an upper cross member 3 and a lower cross member 4 connected together by a pair of side members or pillars 5, 6.

The cross member 3, 4 and the pillars 5, 6 define a window opening 7 within which is fitted a rear window 9 surrounded by a weather strip 8. Around the periphery of the opening 7, the cross members 3, 4 and the pillars 5, 6 have a thickened profiled edge 10 so as to facilitate the fitting of the strip 8 and the window 9 and to ensure the firm connection of the window 9 itself within the frame 2 after assembly.

On their surfaces intended to face inwardly of the motor vehicle, the cross members 3, 4 and the pillars 5, 6, which are channel shaped, have a profiled rib 11 which extends continuously around the perimeter of the opening 7, that is to say, around the entire perimeter of the frame 2.

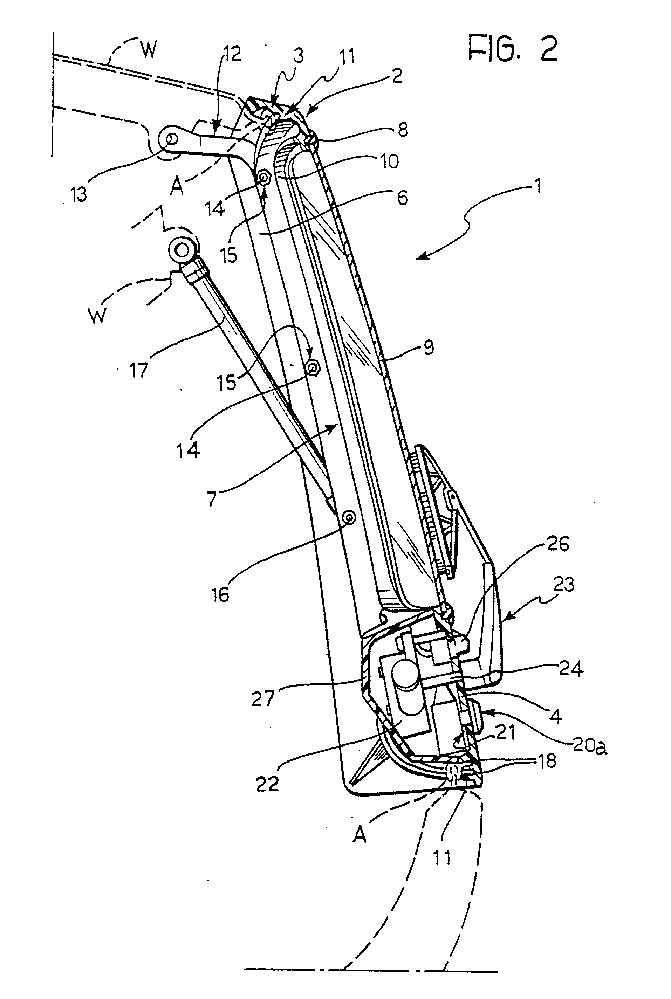

The arrangement is such that, when the door 1 is closed, the profiled rib 11 compresses a tubular rubber weather strip A (illustrated in broken outline in Figure 2) fitted in known manner to the edge of the aperture in the rear wall W of the body of the motor vehicle to which the door 1 is fitted.

The profiled rib 11 thus cooperates with the rear wall in order to ensure its sealing against atmospheric agents.

The connection of the door 1 to the bodywork W is achieved by means of a pair of L-shaped arms 12, each of which has a portion fixed to the frame 2 in correspondence with one of the pillars 5, 6 and a portion which projects approximately perpendicular to the general plane of the door 1. The projecting portion has an eyelet 13 at its free end for receiving a pin for connection to the bodywork W. Thus, the arrangement described is such as to allow the door 1 to be turned about a horizontal axis adjacent the upper cross member 3 of the frame 2.

In order to strengthen condiderably the hinge system, the arms 12 are made of metal and are connected to the frame 2 by bolts 14 for which corresponding screw holes 15 are provided in the pillars 5, 6,

Each of the pillars 5, 6 is also provided with an apertured part 16 acting as an attachment element for one of the ends of a telescopic damping member (air spring) 17 intended to make the opening and closing movements of the door 1 more gradual.

Preferably, the apertures 15 and the apertured parts 16 are outside the profiled rib 11 whereby the sealing effect achieved by this rib, which has two longitudinal grooves 18 for making the compressive action on the weather strip A more effective, is not reduced by the presence in the rib 11 itself of apertures for the passage of the arms 12 and possibly the damping members 17.

Transverse the rib 11, within the cross members 3, 4 and the pillars 5, 6 which, as mentioned above, have a general channel shape, there extend partitions 19 constituting further stiffening ribs for the frame 2.

A lock, indicated 20, is fixed to the lower cross member 4 in correspondence with a recess 21 in the bottom of which is an aperture through which the keyhole 20A of the lock is accessible from outside the vehicle.

A motor (geared motor), indicated 22, controls the operation of a windscreen wiper blade 23 which can move across the outer surface of the window 9.

The geared motor 22 is bolted to the lower cross member 4 of the frame 2 in correspondence with an aperture 24 through which extends the shaft of the motor 22 carrying the arm of the wiper blade 23.

A further aperture 25 above the aperture 24 constitutes a seat for the mounting of a nozzle 26 for spraying a detergent solution onto the outer surface of the window 9.

A dish-shaped element of plastics material, indicated 27, is screwed to the lower cross member 4 of the frame 2 and forms a housing for the motor 22 which drives the windscreen wiper blade 23. The motor 22 is thus protected against bumps and the action of environmental agents.

The dish-shaped element 27, the fitting of which further strengthens the lower part of the frame 2, is provided underneath with two apertures 28, 29.

The aperture 28 constitutes an assembly seat for a connector 30 associated with the electrical supply circuit for the motor 22 which operates the window wiper blade 23. The aperture 29 houses a connector 31 connected in the circuit for supplying the detergent solution to the nozzle 26. The arrangement is such that both the connectors 30, 31 are easily accessible from outside the element 27 to allow the connection of the motor 22 to the electrical system of the motor vehicle and the connection of the nozzle 26 to a pump member (not shown) for the detergent solution, respectively.

### Claims

1. Door for the rear wall of a motor vehicle body comprising:

a frame (2) of plastics material having an upper member (3), a lower member (4), and a pair of side members (5, 6), said members (3 to 6) being integral with one another and defining a generally rectangular window opening (7), and

a pair of hinge assemblies (12) carried by the frame (2) for hinging the door to the motor vehicle body (W) about a horizontal axis adjacent the upper member (3) of the frame (2) itself, characterised in that:

a) the frame (2) is provided on its inner face with a stiffening rib (11) extending continuously around the perimeter of the window opening (7) for sealing the remaining part (A) of the rear wall of the body of the motor vehicle (W) when the door (1) is in the closed position, and

b) each hinge assembly includes an arm (12) fixed to the frame (2).

2. Door according to Claim 1, characterised in that said members (3 to 6) have a general channel shape and have stiffening partitions (19) which extend transverse the stiffening rib (11).

3. Door according to Claim 1, characterised in that the hinge arms (12) are fixed to the frame (2) externally of the stiffening rib (11).

4. Door according to claim 1, characterised in that the stiffening rib (11) has a longitudinal groove (18).

5. Door according to Claim 1, which can be fitted with a motorised window wiper blade (23), characterised in that the frame (2) has an aperture (24) in the lower member (4) for the operating shaft for the wiper blade (23), and in that the frame (2) also has a dish-shaped element (27) attached to the lower member (4) so as to define a cavity forming a housing for the motor (22) for operating the window wiper blade (23).

6. Door according to Claim 5, characterised in that the dish-shaped element (27) has an aperture (28) forming a seat for the assembly of the connector (30) associated with the electrical supply circuit for the motor (22) for operating the rear window wiper blade (23).

7. Door according to Claim 5 or Claim 6, which can be fitted with a nozzle for spraying detergent solution onto the rear window, characterised in that the lower member (4) of the frame (2) has a hole (25) for the mounting of this nozzle (26), and in that the dish-shaped element (27) has an aperture (29) forming a mounting seat for a connector (31) connected to the circuit for supplying detergent solution to the nozzle (26).

8. Door according to Claim 1, which can be provided with members for damping the movement of the door and a lock, characterised in that the frame (2) has parts forming seats for the fixing of the damping members (17) and the lock (20).

### Patentansprüche

1. Hecktür für eine Kraftfahrzeugkarosserie mit einem Rahmen (2) aus Kunststoff, der aus einem oberen Teil (3), einem unteren Teil (4) und zwei Seitenteilen (5, 6) besteht, wobei diese Teile (3 bis 6) einstückig ausgebildet sind und eine im wesentlichen rechteckige Fensteröffnung (7) begrenzen,

sowie mit zwei von dem Rahmen (2) getragenen Scharnierbaugruppen (12) zum Anlenken der Tür an der Kraftfahrzeugkarosserie (W), wobei die Gelenkachse der Scharnierbaugruppen sich in der Nähe des oberen Teils (3) des Rahmens (2) befindet und horizontal verläuft, dadurch gekennzeichnet, daß

a) daß der Rahmen (2) an seiner Innenseite eine Versteifungsrippe (11) besitzt, die unterbrechungsfrei längs der Umfangslinie der Fensteröffnung (7) verläuft, derart daß die übrigen Teile (A) der Heckwandung der Kraftfahrzeugkarosserie (W) abgedichtet sind, wenn die Tür (1) sich in Schließstellung befindet, und

b) jede Scharnierbaugruppe einen an dem Rahmen (2) befestigten Arm (12) umfaßt.

2. Tür nach Anspruch 1, dadurch gekennzeichnet, daß die genannten Teile (3 bis 6) des Rahmens (2) eine im wesenhtlichen kanalartige Form haben und quer zu der genannten Versteifungsrippe (11) verlaufende Versteifungswandungen (19) besitzen.

3. Tür nach Anspruch 1, dadurch gekennzeichnet, daß die Arme (12) der Scharnierbaugruppen außerhalb der Versteifungsrippe (11) an dem Rahmen (2) befestigt sind.

4. Tür nach Anspruch 1, dadurch gekennzeichnet, daß die Versteifungsrippe (11) eine Längsnut (18) besitzt.

5. Tür nach Anspruch 1, die mit einem motorisierten Scheibenwischer (23) ausrüstbar ist, dadurch gekennzeichnet, daß der Rahmen (2) in seinem unteren Teil (4) eine Öffnung (24) für die Antriebswelle des Scheibenwischers (23) besitzt, und daß an dem unteren Teil (4) des Rahmens (2) ferner ein scheibenförmiges Element (27) angebracht ist, das einen Hohlraum begrenzt, der ein Gehäuse für den Antriebsmotor (22) des Scheibenwischers (23) bildet.

6. Tür nach Anspruch 5, dadurch gekennzeichnet, daß das scheibenförmige Element (27) eine Öffnung (28) besitzt, die einen Sitz für die elektrische Verbinderanordnung (30) bildet, die für den elektrischen Speisestromkreis des Antriebsmotors (22) des hinteren Scheibenwischers (23) vorgesehen ist.

7. Tür nach Anspruch 5 oder 6, die mit einer Scheibenwaschdüse zum Aufsprühen von Reinigungsflüssigkeit auf die Rückscheibe ausrüstbar ist, dadurch gekennzeichnet, daß in dem unteren Teil (4) des Rahmens (2) eine Öffnung (25) zum Montieren der Düse (26) vorgesehen ist, und daß das scheibenförmige Element (27) eine Öffnung (29) besitzt, die einen Montagesitz für eine Verbinderanordnung (31) bildet, die mit dem Speisekreis zur Zuführung von Reinigungsflüssigkeit zu der Düse (26) verbundeh ist.

8. Tür nach Anpruch 1, die mit Schwingungsdämpfern zum Dämpfen der Türbewegung sowie mit einem Schloß ausrüstbar ist, dadurch gekennzeichnet, daß der Rahmen (2) Teile aufweist, die Sitze für die Befestigung der Schwingungsdämpfer (17) und des Schlosses (20) bilden.

## Revendications

1. Porte pour la paroi arrière d'une carrosserie de véhicule automobile, comprenant:

un châssis (2) en matière plastique possédant un élément supérieur (3), un élément inférieur (4) et deux éléments latéraux (5, 6), lesdits éléments (3 à 6) étant réunis les uns aux autres en une seule pièce et définissant une baie de fenêtre (7) de forme générale rectangulaire, et deux charnières (12) portées par le châssis (2) pour articuler la pote à la carrosserie (W) du véhicule automobile autour d'un axe horizontal poche de l'élément supérieur (3) du châssis (2), caractérisée en ce que:

a) le châssis (2) est muni sur sa face interne, d'une nervure raidisseuse (11) qui s'étend sans interruption sur tout le périmètre de la baie (7) de la fenêtre pour fermer à joint étanche la partie restante (A) de la paroi arrière de la caisse (W) du véhicule automobile lorsque la porte (1) est dans la position fermée, et

b) chaque charnière comprend un bras (12) fixé au châssis (2).

2. Porte selon la revendication 1, caractérisée en ce que lesdits éléments (3 à 6) présentent en section la forme générale d'un U et comprennent des cloisons raidisseuses (19) qui s'étendent transversalement à la nervure raidisseuse (11).

3. Porte selon la revendication 1, caractérisée en ce que les bras de charnières (12) sont fixés au châssis (2) en dehors de la nervure raidisseuse (11).

4. Porte selon la revendication 1, caractérisée en ce que la nervure raidisseuse (11) présente une rainure longitudinale (18).

5. Porte selon la revendication 1, qui peut être équipée d'un balai d'essuie-glace motorisé (23), caractérisée en ce que le châssis (2) présente un trou (24) ménagé dans l'élément inférieur (4) pour donner passage à l'arbre d'entraînement du balai d'essuie-glace (23) et en ce que le châssis (2) possède en outre un élément en forme de cuvette (27) fixé à l'élément inférieur (4) de manière à définir une cavité qui forme un logement pour le moteur (22) destiné à actionner le balai d'essuie-glace (23).

6. Porte selon la revendication 5, caractérisée en ce que l'élément en cuvette (27) présente un trou (28) formant un logement pour le montage du connecteur (30) associé au circuit d'alimentation électrique du moteur (22) qui sert à actionner le balai d'essuie-glace arrière (23).

7. Porte selon la revendication 5 ou la revendication 6, qui peut être équipée d'un gicleur destiné à projeter une solution détergente sur la fenêtre arrière, caractérisée en ce que l'élément inférieur (4) du châssis (2) présente un trou (25) pour le montage de ce gicleur (26) et en ce que l'élément (27) en forme de cuvette présente un trou (29) qui forme un logement de montage pour un connecteur (31) raccordé au circuit servant à envoyer la solution détergente au gicleur (26).

8. Porte selon la revendication 1, qui peut être équipée d'éléments destinés à amortir le mouvement de la porte ainsi que d'une serrure, caractérisée en ce que le châssis (2) possède des parties formant des portées pour la fixation des éléments amortisseurs (27) et pour la serrure (20).

FIG. 1

0 111 457

FIG. 2

FIG. 3